# FASCICULE DE BREVET EUROPEEN

(11) **EP 1 718 950 B1**
(45) Date de publication et mention de la délivrance du brevet: **14.01.2009**
(21) Numéro de dépôt: 05730804.1
(22) Date de dépôt: 23.02.2005
(51) Int. Cl.: G01N 11/14, G01N 11/10

(54) **PROCEDE ET DISPOSITIF PERMETTANT DE DETECTER LA FORMATION ET LE DEVELOPPEMENT DE BIOFILMS DANS UN MILIEU DE CULTURE**
VERFAHREN UND VORRICHTUNG ZUM NACHWEIS DER BILDUNG UND ENTWICKLUNG VON BIOFILMEN IN EINEM KULTURMEDIUM
METHOD AND DEVICE FOR DETECTING THE FORMATION AND DEVELOPMENT OF BIOFILMS IN A CULTURE MEDIUM

(30) Priorité: 23.02.2004 FR 0401791; 28.06.2004 FR 0407062
(43) Date de publication de la demande: 08.11.2006
(73) Titulaire: Bernardi, Thierry, 63170 Perignat les Sarliève (FR)
(72) Inventeur: BERNARDI, Thierry, F-63170 Perignat les Sarliève (FR); BARA, Nicolas, F-75002 Paris (FR)
(74) Mandataire: Bredema
(86) Numéro de dépôt international: PCT/FR2005/000427
(87) Numéro de publication internationale: WO 2005/090944

(56) Documents cités:
- WO-A-01/86255
- US-A- 3 635 678
- US-A- 3 696 661
- US-A- 4 081 242
- US-A- 5 072 610
- US-A1- 2002 064 866
- US-A1- 2003 012 693

## Description

La présente invention se rapporte au domaine de la détection de la viscosité d'un milieu de culture.

La présente invention se rapporte plus particulièrement au domaine de l'étude du développement d'un biofilm dans un milieu de culture homogène ou non homogène. Ledit biofilm en se développant entrave le mouvement de particules aptes à se déplacer dans un champ magnétique, électrique ou électromagnétique, comme des particules chargées électriquement (par la présence d'ions positifs et/ou négatifs) ou magnétiques ou magnétisables ou encore recouvertes d'une couche magnétique ou magnétisable.

A cet égard, dans le présent texte, le terme "viscosité" doit s'entendre comme faisant référence au degré de liberté de la particule magnétisable dans le biofilm. On comprendra à la lecture du présent texte que l'invention n'a pas pour objet une mesure de la viscosité d'un milieu comme on aurait pu l'entendre avec le terme "viscosité" dans son sens commun, mais bien la mise en évidence du développement d'un microorganisme par la mesure du degré de liberté d'une (ou plusieurs) particules magnétisables, dont le mouvement est ou non entravé par un biofilm, lui-même significatif de la présence ou non dudit microorganisme en développement.

De même l'expression "milieu de culture" doit s'entendre comme tout milieu dans lequel au moins un microorganisme est susceptible d'être présent et de se développer. Il s'agit donc d'un milieu qui peut être naturel ou synthétique. Ainsi par exemple, l'eau entre dans cette définition. Par la suite dans le présent texte l'expression "milieu de culture" ou les termes "milieu" ou "culture" pourront être employés indifféremment en référence à cette définition.

Ainsi par "milieu de culture", "milieu" ou "culture", on entend selon l'invention le microorganisme et le milieu dans lequel il se trouve, ou éventuellement le milieu seul.

Un micro-organisme est un être vivant microscopique tel que les bactéries, les levures, les champignons, les algues, les protistes. Un micro-organisme peut être unicellulaire ou pluricellulaire. Des stades larvaires d'organismes pluricellulaires (métazoaires) peuvent aussi être à l'origine de biofilms.

La plupart des micro-organismes (pathogènes ou non) ont été étudiés jusqu'ici sous leur forme « planctonique », libres et isolés dans un milieu (cultivés en suspension ou sur milieu sélectif). Or, en milieu naturel, hors laboratoire, les populations bactériennes se trouvent fixées sur un support (état « sessile ») et se développent en communauté organisée nommée « biofilm ». Cette communauté bactérienne est généralement englobée dans une matrice d'exopolysaccharides (EPS) limitant les échanges avec le milieu environnant (A. Filloux, I. Vallet. Biofilm : « Mise en place et organisation d'une communauté bactérienne ». Médecine/Sciences 2003 ; 19: 77-83).

Lorsqu'un biofilm se développe, il y a d'abord adhésion des bactéries sur un support puis colonisation de ce support. Les bactéries en se multipliant forment rapidement un film constitué par des strates de corps cellulaires sécrétant une gangue d'exopolysaccharides qui les protège des agressions du milieu environnant (Costerton et al. Bacterial Biofilms. Sciences 1999 ; 284-6). La cinétique de formation d'un biofilm peut être subdivisée en 5 étapes :
- Conditionnement de la surface : Les molécules organiques ou minérales présentes dans la phase liquide vont s'adsorber sur la surface, pour y former un « film conditionnant ».
- L'adhérence ou adhésion réversible : Les microorganismes présents se rapprochent des surfaces par gravimétrie, mouvements browniens ou par chimiotactisme s'ils possèdent des flagelles. Au cours de cette première étape de fixation, faisant intervenir uniquement des phénomènes purement physiques et des interactions physico-chimiques faibles, les microorganismes peuvent encore être facilement décrochés.
- L'adhésion : Cette étape plus lente fait intervenir des interactions de plus forte énergie ainsi que le métabolisme microbien et les appendices cellulaires du microorganisme (flagelles, pilis, ...). L'adhésion est un phénomène actif et spécifique. Les premiers colonisateurs vont s'attacher de manière irréversible à la surface grâce notamment à la synthèse d'exopolysaccharides. Ce processus est relativement lent et dépend des facteurs environnementaux et des microorganismes en présence.
- La maturation du biofilm (développement et colonisation de la surface) : Après avoir adhéré à une surface, les bactéries se multiplient et se regroupent pour former des microcolonies entourées de polymères. Cette matrice de polymères (ou glycocalyx) va agir comme un « ciment » et renforcer l'association des bactéries entre-elles et avec la surface pour finalement former un biofilm et atteindre un état d'équilibre. Le biofilm se développe généralement en une structure tridimensionnelle qui constitue un lieu de confinement. Ce micro-environnement va être le siège de nombreuses modifications physiologiques et moléculaires par rapport au mode de croissance planctonique. Le biofilm ainsi formé va occuper toute la surface qui lui est offerte si les conditions le lui permettent. Généralement la maturation du biofilm est corrélée à la production d'EPS même si certaines espèces de microorganismes ne synthétisant pas ou peu de polymères peuvent également adhérer et former des biofilms sur des surfaces.
- Décrochement : Les biofilms sont des structures en perpétuel équilibre dynamique et évoluent en fonction du support, des micro-organismes, et de l'environnement. Cette évolution peut se traduire par des décrochements de cellules ou d'agrégats.

Ce relargage de cellules dans le milieu liquide peut permettre par la suite la contamination d'autres surfaces et est en général la cause de nombreuses maladies récurrentes en milieu médical (source de résistances).

La nature des biofilms est très variée, certains sont très riches en ExoPolysaccharide (EPS), d'autres sont principalement constitués de corps bactériens.

En santé humaine, les biofilms sont responsables d'infections de plus en plus difficiles à juguler : sur toute la sphère ORL (conduit auditif, muqueuse nasale, conjonctive de l'oeil ...), sur les dents (apparition de tartre, de caries, ...), sur les bronches, les poumons (chez les patients atteints de mucoviscidose ...), au niveau du tractus urogénital (...).

Ils sont en outre à l'origine de la plupart des pathologies nosocomiales (plus de 10 000 décès par ans) en se formant au niveau de cathéters, ou d'implants (valves cardiaques, hanches artificielles, sondes urinaires ...) (J.W. Costerton, P. Stewart et E.P. Greenberg, Bacterial Biofilms : « A common cause of persistent infections ». Science, vol. 284, pp1318-1322).

Les biofilms sont également présents dans les tours de réfrigération, responsables d'infections par les Legionelles.

Ils concernent également l'industrie agro-alimentaire pour leur implication dans les cas d'intoxications alimentaires (formation lors de ruptures de la chaîne du froid, développement sur les outils de tranchage, de broyage, sur les surfaces de travail).

De même, les biofilms se développent dans les canalisations, provoquant notamment des phénomènes de corrosion.

Les biofilms se développent aussi à la surface -d'objets immergés, comme par exemple des coques de bateaux, à l'origine de problèmes de « fouling » (encrassement, de la surface des coques de bateaux à cause de la colonisation des coques par des microorganismes divers).

Il est à noter que les bactéries ne sont pas seules à créer des biofilms : les champignons, les algues, les protozoaires s'organisent également en biofilms.

Les biofilms sont donc omniprésents dans de nombreux domaines, présentant des risques sanitaires et causant des dommages relativement importants.

Cependant, le développement et le comportement de ces biofilms restent mal connus du fait de leur complexité à être étudiée, bien que de nombreuses méthodes d'étude du développement des biofilms sont mises en oeuvre.

Les méthodes d'études des biofilms sont encore principalement basées sur la colonisation de pièces de verre ou de plastique immergées dans un milieu de culture contenu dans des flacons sous agitation dans des étuves afin par la suite de les colorer au cristal violet ou de les observer au microscope.

Il existe d'autres méthodes de détection plus complexes, comme par exemple des détections par Micro balance à cristal de quartz (Q-CMD, Quartz Cristal Microbalance with Dissipation Monitoring), des détections par MTA (Mass Transport Analysis), par UFDR (Ultrasonic Frequency Domain Reflectometry), par PCR in situ (sur gène fonctionnel Amo A), par FISH (hybridation in situ en fluorescence), par CLSM (Confocal Laser Scanning Microscopy), par PAS (Photo Acoustic Spectroscopy), ...

D'autres méthodes encore utilisent des particules/billes magnétiques revêtues de lectine, ou d'anticorps pour isoler les bactéries responsables du développement de biofilm, ceci pour permettre ensuite la caractérisation de ces microorganismes par des méthodes classiques d'immunoanalyse ou par biologie moléculaire "(hybridation ou PCR).

De telles méthodes s'avèrent cependant lourdes à mettre en oeuvre et restent relativement onéreuses. Par ailleurs, elles ne permettent pas de donner un enseignement suffisamment probant sur le comportement des bactéries et donc la formation et le développement des biofilms. En effet, ces méthodes ne permettent pas le suivi du développement d'un biofilm, qu'il soit principalement constitué de corps cellulaires (type Listeria), d'EPS (exopolysaccharide) ou d'une matrice analogue sécrétée par les microorganismes colonisateurs (type pseudomonas).

La présente invention se rapporte à un procédé et un dispositif permettant de détecter l'évolution de la viscosité d'un milieu de culture, homogène ou non homogène, trouble et/ou opaque et à l'utilisation dudit procédé et/ou dudit dispositif dans des applications particulières.

Le terme de « milieu de culture non homogène » doit être compris, dans la présente Demande, dans son sens le plus large. En particulier, un milieu de culture non homogène pourra consister en un milieu de culture limpide dans lequel évoluent des microorganismes en suspension.

On connaît de l'art antérieur la demande de brevet français FR2555316. Cette demande de brevet porte sur un procédé et un dispositif pour déterminer la viscosité d'un milieu fluide, le procédé consistant à immerger une bille conductrice dans le milieu fluide, à appliquer à la bille un champ magnétique tournant sensiblement centré sur celle-ci, le champ tournant étant tel que l'écoulement du fluide au contact de la bille mise en rotation demeure laminaire, et à déterminer une grandeur reliée au couple exercé sur la bille du fait de la viscosité du milieu fluide. Ainsi, la bille, plongée dans un milieu visqueux, subit un moment de freinage proportionnel à la viscosité, et prend en régime permanent une rotation dont la période est également proportionnelle à la viscosité du milieu liquide à analyser. La rotation de la bille peut être visualisée à l'aide des tâches de diffraction obtenues par éclairement de la bille à l'aide d'un faisceau laser selon son axe de rotation.

Cependant, un tel procédé n'est adapté que pour une mise en oeuvre dans un milieu visqueux homogène. Or, un milieu de culture de bactéries est opalescent, trouble et opaque. Cette méthode ne permet donc pas de déterminer la formation ou non de biofilms dans le milieu de culture.

Il est également proposé dans l'abrégé de la demande de brevet japonais JP61161436 une méthode de mesure de la viscosité d'un fluide non-newtonien reposant sur le principe de l'attraction magnétique. La méthode consiste à mesurer la viscosité au moyen de la mesure du déplacement et de la vitesse de déplacement d'un barreau aimanté sous l'effet d'un champ magnétique.

La méthode proposée dans l'abrégé japonais permet de déterminer les caractéristiques relatives au fluide visqueux comme la viscosité. Cependant, la méthode en question ne permet en aucune manière de reproduire le comportement d'un microorganisme, tel qu'une bactérie, évoluant dans le fluide visqueux.

Le brevet américain US 3 335 678 décrit un procédé permettant de mesurer la vitesse de coagulation de sang.

La demande international de brevet WO 01/86255 décrit un procédé de mesure de la viscosité d'un milieu de culture de microorganismes.

Le brevet américain US 5 072 610 décrit un procédé permettant de mesurer le temps au bout duquel l'état d'un milieu liquide est modifié après ajout d'un réactif dans le milieu.

La présente invention a donc pour objet de proposer un procédé et un dispositif permettant de modéliser le développement des biofilms dans un milieu non homogène, trouble et opaque correspondant au milieu de culture dans lequel les microorganismes se développent pour former de tels biofilms.

La présente invention a également pour but de permettre la modélisation du processus de colonisation d'une surface par des microorganismes.

La présente invention a également pour but de permettre la mise en évidence des différences de viscosité dans un milieu non homogène, et par conséquent de permettre la modélisation du milieu de culture en différentes zones selon le développement de biofilms dans chaque zone.

La présente invention a également pour objet de proposer un procédé et un dispositif de détection du développement des biofilms de mise en oeuvre simple, peu onéreuse et automatisable.

Pour ce faire, la présente invention est du type décrit ci-dessus et elle est remarquable, dans son acception la plus large.

Ainsi l'invention a pour objet un procédé permettant de mesurer la viscosité d'un milieu de culture de microorganismes (5), comportant les étapes consistant successivement à :
a) immerger au moins une particule chargée électriquement, magnétique ou magnétisable ou recouverte d'au moins une couche magnétique ou magnétisable dans ladite culture,
b) soumettre ladite culture à un champ électrique, magnétique ou électromagnétique, et de préférence magnétique, de façon à mettre ladite particule en mouvement,
c) détecter optiquement le degré de liberté de mouvement de ladite particule dans ladite culture, de préférence par mesure optique, ledit procédé n'utilisant pas de microscope à balayage.

L'étape b) consiste à soumettre ladite culture soit à un champ électrique, soit à un champ magnétique, soit à un -champ électromagnétique, éventuellement appliqué par impulsion, soit à une augmentation progressive d'un champ électromagnétique, soit à des variations plus complexes de champ électromagnétique soit à une combinaison de champs.

L'augmentation progressive du champ électromagnétique est obtenue, selon une configuration particulière de l'invention, par rapprochement d'un aimant selon une trajectoire rectiligne ou sinusoïdale, ou bien selon un mouvement oscillant présentant ou non une amplitude d'oscillation et une fréquence variables. Les variations plus complexes du champ électromagnétique sont obtenues par rotation, ou par des combinaisons de mouvements d'un barreau aimanté à proximité de ladite culture.

Avantageusement, ledit champ électrique, magnétique ou électromagnétique est généré par des moyens générateurs de champ en mouvement.

Avantageusement, la culture s'écoule en flux constant ou en flux discontinu à intervalle de temps donné à travers un réacteur ouvert. Cette dernière configuration est préférée dans la mesure où elle permet une adéquation avec les conditions naturelles du développement d'un biofilm.

Selon l'invention, en ce qui concerne la particule, cette dernière peut être, soit une particule chargée électriquement, soit une particule magnétique, soit une particule revêtue d'au moins une couche magnétique, soit une particule magnétisable, soit une particule revêtue d'un couche magnétisable.

Avantageusement, ladite particule magnétique peut présenter une taille sensiblement identique à la taille des microorganismes générant les biofilms.

Avantageusement encore, on peut utiliser des particules de tailles différentes et/ou, avantageusement aussi, de couleurs différentes. Les particules de plus petite taille sont immobilisées avant les particules de plus grande taille lors du développement d'un biofilm. On peut ainsi caractériser plus précisément le développement dudit biofilm ou sa dégradation.

De même, selon une configuration avantageuse de l'invention, ladite particule est génératrice d'un signal détectable par ledit dispositif de détection optique du mouvement. Ledit signal peut être détecté soit de façon autonome (avantageusement par radioactivité), soit par ré-émission d'énergie transmise en flux continus ou discontinus (avantageusement transmission d'énergie lumineuse par faisceau laser et ré-émission de fluorescence).

Avantageusement, ladite particule est de type fluorescente, phosphorescente, radioactive ou chimioluminescente.

Selon un mode préférentiel de l'invention, l'étape c) consiste à éclairer au moyen d'une source lumineuse ladite particule et à détecter le mouvement de ladite particule dans ladite culture.

Pour ce faire, ladite particule pourra avantageusement être fluorescente.

Selon une configuration préférée, ladite particule (3) est configurée de telle sorte qu'elle est en position stable au repos (en l'absence de champ) dans ledit réacteur (1). Avantageusement, ladite particule peut être une particule par exemple en forme de palet, de géométrie asymétrique avec une face plane, (...).

Selon un mode de mise en oeuvre particulier de l'invention, ledit procédé consiste en outre à réaliser une mesure de la viscosité de ladite culture, selon le procédé tel que décrit précédemment, à un temps t=0 correspondant à l'ensemencement de ladite culture, et au moins une mesure à un temps t de la viscosité de ladite culture selon le procédé tel que décrit précédemment, ainsi qu'à comparer lesdites mesures à to et t.

Le procédé selon l'invention permet de mesurer la viscosité d'une culture de microorganismes homogène ou non homogène, de préférence non homogène.

Selon un autre aspect, la présente invention a pour objet un dispositif permettant la réalisation du procédé selon l'invention, tel que décrit précédemment.

Ainsi, la présente invention a pour objet un dispositif permettant de mesurer la viscosité d'une culture de microorganismes, homogène ou non homogène, comprenant :
- au moins un réacteur de culture destiné à recevoir ladite culture pour réaliser la détection de la formation et du développement de biofilms,
- au moins une particule chargée électriquement ou magnétique ou magnétisable ou recouverte d'au moins une couche magnétique ou magnétisable, immergée dans la culture,
- des moyens pour générer un champ électrique, magnétique ou électromagnétique, de préférence un champ magnétique, ledit champ étant appliqué à ladite particule de façon à la mettre en mouvement,
- un dispositif de détection optique du mouvement de ladite particule, autre qu'un microscope à balayage.

Par réacteur de culture, on entend soit une enceinte présentant au moins une extrémité fermée, du type tube, puit, (...) (réacteur fermé), soit une enceinte présentant deux ouvertures pour permettre l'écoulement de ladite culture au travers de ladite enceinte (réacteur ouvert).

Selon une première configuration de l'invention, ledit réacteur présente une extrémité fermée de sorte à former un fond plat.

Afin de présenter une position stable au fond du tube lorsque la particule est au repos, c'est-à-dire lorsque aucun champ n'est généré, le fond dudit réacteur peut présenter une ou plusieurs cavités ou sillons destinés à recevoir la ou lesdites particule(s).

Selon une deuxième configuration de l'invention, ledit réacteur présente une extrémité fermée de sorte à former un fond hémisphérique.

Selon une autre configuration de l'invention, le réacteur peut présenter deux extrémités ouvertes. Dans cette configuration, ledit réacteur peut être configuré pour permettre un écoulement de ladite culture en flux constant ou en flux discontinu à intervalle de temps donné.

En ce qui concerne ladite particule, cette dernière est, avantageusement, soit une particule chargée électriquement (par la présence d'ions positifs et/ou négatifs), soit une particule magnétique, soit une particule revêtue d'au moins une couche magnétique, soit une particule magnétisable, soit une particule revêtue d'au moins une couche magnétisable.

Avantageusement, ladite particule magnétique présente une taille sensiblement identique à la taille des microorganismes générant les biofilms.

Avantageusement, on peut utiliser des particules de tailles différentes et, avantageusement aussi, de couleurs différentes. Les particules de plus petite taille sont immobilisées avant les particules de plus grande taille lors du développement d'un biofilm. On peut ainsi caractériser plus précisément le développement dudit biofilm ou sa dégradation.

De même, selon une configuration avantageuse de l'invention, ladite particule est génératrice d'un signal détectable par ledit dispositif de détection optique du mouvement. Avantageusement, ladite particule est de type fluorescente ou phosphorescente ou radioactive ou chimioluminescente.

Concernant ledit dispositif de détection optique du mouvement, Celui-ci comporte une source lumineuse émettant en direction de ladite particule, et des moyens de détection optiques permettant de détecter le mouvement de ladite particule dans la culture. Par moyens de détection optiques, on entend tout moyen de détection utilisable. Selon un mode de réalisation préféré, il s'agira de moyens optiques macroscopiques. Selon un mode particulier de l'invention, le mouvement de la particule pourra être visualisé directement, à l'oeil nu.

Dans le cadre de cette détection, la particule éclairée pourra consister en une particule fluorescente ou une particule noire, ou tout du moins opaque.

Avantageusement, on pourra utiliser des particules de couleurs différentes, de tailles différentes, de densités différentes, de formes/géométries différentes, de constitutions physico-chimiques différentes, d'états de surface différents pour multiplier les critères de caractérisation de développement d'un biofilm.

Avantageusement, on pourra coupler à la surface des particules des groupements chimiques à tester et tester les propriétés anti-adhésion desdits groupements chimiques (particules mobiles).

Avantageusement, on pourra coupler à la surface des particules des molécules permettant de caractériser certaines catégories de microorganismes et tester l'adhésion desdites catégories de microorganismes (particules immobilisées).

Ladite particule pourra être directement configurée pour rester dans une position stable au repos dans le fond plat dudit réacteur. Avantageusement, ladite particule peut être une particule par exemple en forme de palet, de géométrie asymétrique avec une face plane, (...).

Avantageusement, ledit dispositif peut comprendre en outre des moyens de mesure pour mesurer la viscosité de ladite culture à des intervalles de temps donnés et des moyens de comparaison permettant de comparer les mesures obtenues.

De cette manière, il peut être testé l'entrave au déplacement de ladite particule due à la présence des microorganismes colonisateurs, ou d'exopolysaccharides ou de matrice secrétée par les microorganismes dans laquelle ladite particule est enchâssée à différents temps.

On comprendra mieux l'invention à l'aide de la description, faite ci-après à titre purement explicatif, de différents modes de réalisation de l'invention, en référence aux figures annexées :
- la figure 1 illustre le principe de détection de la formation et du développement du biofilm dans un tube à fond hémisphérique ;
- la figure 2 représente le principe de la détection de la formation d'un biofilm sur le fond d'un tube à fond hémisphérique (ou de tubes autres qu'à fond plat)(vue de dessus).
- la figure 3 illustre le principe de détection de la formation et du développement du biofilm dans un tube à fond plat ;
- la figure 4 illustre le principe de détection de la formation et du développement du biofilm dans un tube aux extrémités ouvertes ;
- la figure 5 représente une autre illustration du principe de détection de la formation et du développement du biofilm dans un réacteur (1) du type tube (1) à fond (2) plat.
- la figure 6 représente une variante de l'invention présentée à la figure 5.
- la figure 7 représente une application particulière de l'invention telle que décrite dans la figure 5.
- la figure 8 représente une application particulière de l'invention dans le domaine de la surveillance de la contamination des canalisations, particulièrement dans la surveillance de la contamination des vannes.

Le principe général pour détecter la formation et le développement d'un biofilm dans une culture contenant des microorganismes se déroule comme suit.

Une ou plusieurs particules ou billes chargées électriquement, magnétique(s), magnétisable(s) ou revêtue(s) d'une couche magnétique ou magnétisable est (sont) placée(s) dans la culture. La composition des particules pourra varier à condition qu'elle soit compatible avec une réactivité dans un champ électrique, magnétique ou électromagnétique. Afin d'alléger la description qui suit, on ne décrira lesdites particules qu'en terme de billes.

Lesdites billes vont alors se retrouver incorporées petit à petit dans la matrice sécrétée par les microorganismes, jusqu'à une immobilisation complète.

Dans le processus biologique de la formation du biofilm, les microorganismes sont immobilisés et englobés dans cette matrice. Ils sont alors dissimulés, protégés des agressions du milieu extérieur, d'où l'origine des résistances aux antibiotiques observées (pathologies nosocomiales). Les billes permettent de mimer cette immobilisation.

Afin de mimer cette immobilisation, un générateur de champ est approché vers lesdites billes. Ainsi, dans les milieux où aucun biofilm ne s'est développé, les billes réagissent à l'approche dudit générateur et se déplacent, en général vers le générateur de champ et éventuellement selon le mouvement dudit générateur. En revanche, si les particules sont englobées dans la matrice du biofilm, leur mouvement sera freiné, voire empêché selon le degré de formation du biofilm.

La méthode selon la présente invention réside donc dans l'exploitation du comportement de billes pouvant être mises en mouvement sous l'effet de champs, électriques, magnétiques ou électromagnétiques. Si le comportement desdites billes est entravé par la présence de la matrice qui compose le biofilm, il est alors possible de détecter et de visualiser leur degré de mobilité (mobiles, semi mobiles, immobiles), et par conséquent de visualiser le développement du biofilm.

Ladite méthode permet en outre de différencier les billes pouvant être mises en mouvement sous l'effet d'un champ et celles dont les mouvements sont entravés par la présence de la matrice sécrétée par les microorganismes.

La détection du mouvement des billes dans le biofilm est effectuée par mesure optique, soit par éclairage direct, soit par éclairage indirect. Dans ce dernier cas, les billes utilisées seront avantageusement fluorescentes.

En fonction du format choisi des billes (géométrie, taille, densité), le corps bactérien sera mimé plus ou moins précisément et l'évolution du biofilm caractérisée avec de nouveaux critères.

En fonction de la fréquence de présentation du générateur de champ, en fonction de la force du champ, l'évolution dynamique de la matrice constitutive du biofilm pourra être suivie. De même, une fois un biofilm constitué, la dégradation de ce dernier pourra être suivie sous l'effet d'un traitement particulier.

Il est alors possible, avec des tests biochimiques, d'analyser la constitution de-ladite matrice.

De même, le suivi de l'immobilisation de la bille par la matrice constituant le biofilm permet de suivre par analogie le processus d'enfouissement des bactéries dans cette matrice qu'elles sécrètent.

Afin de tester le développement de biofilm au fond d'un tube, la détection sera conduite avec des particules suffisamment denses pour sédimenter au fond dudit tube. Inversement, la détection sera conduite avec des particules peu denses pour flotter en surface du milieu de culture, ceci afin d'étudier le développement de biofilm en surface (interface air/liquide).

En outre, en jouant sur la densité des particules, des séries de détection peuvent être conduites à des interfaces solide/liquide, liquide/liquide, liquide/gaz.

Les détections peuvent également mettre en oeuvre des particules de tailles différentes, pouvant en outre être, par exemple, différenciées par des couleurs différentes.

Des exemples de mise en oeuvre de cette méthode vont maintenant être décrits. Dans ces exemples, les microorganismes décrits sont des bactéries. Il est entendu que la description qui suit est applicable à tout autre microorganisme pour lequel on voudra étudier le développement du biofilm. Cependant, la taille des billes sera avantageusement adaptée à la taille des microorganismes étudiés si l'on souhaite modéliser le comportement des microorganismes dans le biofilm formé.

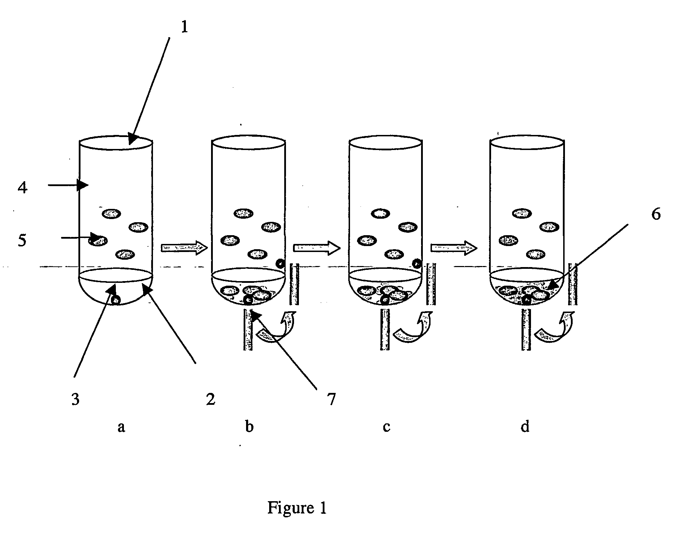

Les figures 1 à 8 illustrent le principe de détection de la formation d'un biofilm dans différentes géométries de tubes recevant une culture comprenant les bactéries à étudier.

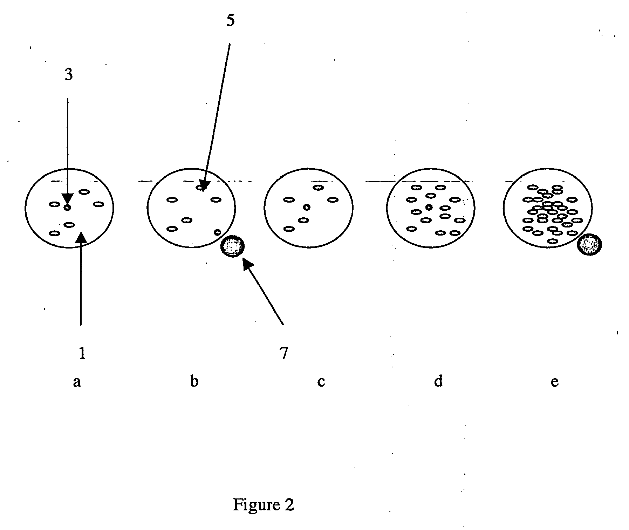

La figure 1 et la figure 2 illustrent en particulier le principe de détection de la formation et du développement du biofilm dans un réacteur (1) du type tube (1) à fond (2) hémisphérique. La figure 1 est une illustration en coupe, la figure 2 est une vue de dessus.

Par exemple, l'expérience peut être conduite sur une plaque présentant 96 tubes (ou puits) de contenance de 200µl. Dans le présent exemple, une bille (3) est déposée au fond de chaque tube (1). Bien entendu, le procédé ne se limite pas nécessairement à une seule bille. Un milieu de culture (4) est alors ajouté dans chacun des tubes (1), ce milieu étant ensuite ensemencé avec une souche bactérienne (5) pouvant évoluer en biofilm (6) et ce, dans des conditions de cultures standardisées (température, oxygénation, pH ...).

A intervalle de temps régulier, un aimant (7) positionné sous le tube (1), et plus particulièrement sous la bille (3), se déplace pour remonter régulièrement le long de la paroi dudit tube (1).

Lorsque la bille (3) ne rencontre pas d'obstacle dans son mouvement ou n'est pas suffisamment entravée dans la matrice sécrétée par les bactéries (5) et constituant le biofilm (6), la bille (3) suit le mouvement dudit aimant (7) (Figures 1b et 1c ou 2b et 2c). Lorsque l'aimant est éloigné, la bille n'est plus soumise à son champ et peut retourner à sa position initiale. En revanche, lorsque la formation du biofilm (6) est telle que le mouvement de la bille (3) est entravé voire empêché, ladite bille (3) reste immobile au fond du tube (1) (Figure 1d ou 2d). Cet état traduit alors un développement de la matrice extracellulaire constitutive du biofilm (6) dans le tube (1) tel que ladite matrice englobe la bille (1) de la même façon qu'elle englobe les bactéries (5).

Dans cet exemple, l'aimant est manipulé de façon à déplacer la bille (3) le long de la paroi dudit tube (1). Cependant, il pourra être avantageux de manipuler l'aimant en direction de la bille (3) ou inversement, de manipuler le tube vers l'aimant, de sorte à déplacer la bille (3) selon une trajectoire autre que la paroi dudit tube (1).

Avantageusement, un - dispositif optique permet de visualiser automatiquement le degré de liberté de ladite bille (non représenté). Ledit dispositif comprend une source lumineuse émettant en direction de ladite bille (3) et des moyens de détection permettant de détecter le mouvement de la bille (3) dans la culture (4).

Lorsque le tube (3) est transparent, la source lumineuse est disposée sous ledit tube (1) de sorte à émettre le faisceau lumineux directement vers la bille magnétique (3). Les moyens de détection sont alors disposés au-dessus dudit tube (3). Ainsi, la détection du mouvement de la bille (3) est effectuée en suivant le mouvement de la tâche sombre correspondant à la bille (3).

Lorsque le tube (1) est en matériau opaque, comme par exemple en métal, la source lumineuse est disposée au-dessus dudit tube de sorte à émettre le faisceau lumineux au travers de la culture (4) vers la bille magnétique (3). De même que précédemment, lesdits moyens de détection sont disposés au-dessus dudit tube. Dans cette configuration, lesdites billes (3) sont constituées avantageusement en matériau fluorescent. Ainsi, lorsque lesdites billes (3) sont éclairées via la source lumineuse, leur mouvement est détecté par lesdits moyens de détection en suivant le mouvement de la tâche fluorescente correspondant à la bille (3).

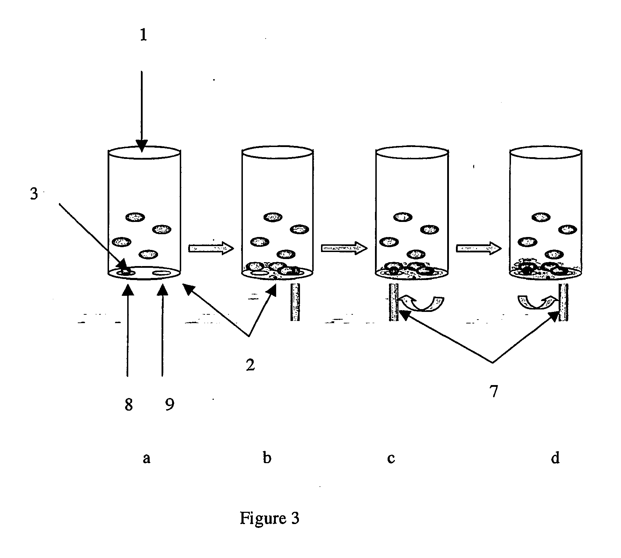

La figure 3 illustre une variante de réalisation de l'invention : la détection de la formation du biofilm (6) dans un réacteur (1) du type tube (1) à fond (2) plat.

Avantageusement, le fond (2) du tube (1) est muni de deux cavités (8, 9) adjacentes. Une bille (3) est déposée au temps initial dans une desdites cavités (8). L'aimant (7) est alors disposé au contact de l'autre cavité (9). Lorsque la bille (3) n'est pas entravée dans son mouvement par le biofilm (6), elle glisse de la cavité (8) à la cavité adjacente (9) (Figure 3b). L'aimant (7) est ensuite déplacé sous la première cavité (8) (Figure 3c). Sous l'effet attractif de l'aimant (7), son mouvement n'étant toujours pas empêché, ou tout du moins pas suffisamment entravé, la bille (3) glisse vers ladite première cavité (8). Et le test va être répété à intervalles réguliers jusqu'à observer l'immobilisation totale ou partielle des billes (3) comme l'illustre la figure 3d : lorsque l'aimant (7) est déplacé sous la deuxième cavité (9), la bille (3), engluée dans le biofilm (6), ne peut plus, en réponse à l'effet attractif de l'aimant (7), passée dans la deuxième cavité (9) du fait de l'entravement de son mouvement dans ledit biofilm (6).

Dans une variante, le fond du tube ne présente pas de cavités destinées à recevoir la ou les billes magnétiques. A cet effet, ladite bille magnétique (3) est configurée pour pouvoir se maintenir dans une position stable au fond dudit tube (1).

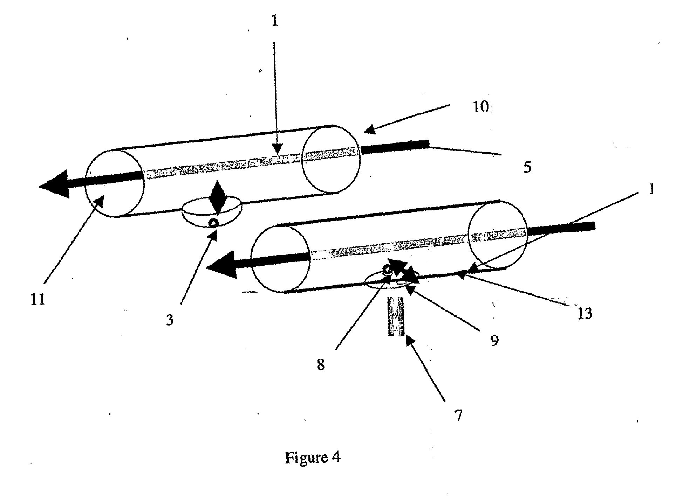

La figure 4 illustre un autre mode de réalisation de l'invention mettant en oeuvre un réacteur (1) du type tube (1) présentant des extrémités ouvertes (10, 11). Le tube (1) est alors configuré pour permettre un flux continu du milieu de culture (5).

Comme dans l'exemple du tube à fond plat, la surface interne (12) de la paroi (13) dudit tube (1) présente avantageusement des cavités (8, 9) pour recevoir la ou lesdites bille(s) (3). Selon le même principe que celui décrit précédemment, un aimant (7) est présenté de façon à mettre en mouvement les billes (3) de façon à ce qu'elles passent d'une cavité à l'autre.

Dans le cas où aucune cavité n'est formée à la surface interne (12) de la paroi (13) dudit tube (1), le principe sera similaire à celui décrit pour le tube à fond hémisphérique : l'aimant (7) est présenté et déplacé de façon à remonter lesdites billes sur la face interne (12) de la paroi (13) dudit tube (1):

Selon une configuration particulière de l'invention, les billes enchâssées dans le biofilm (6) peuvent être par la suite récupérées par un aimant plongeant dans la culture. De cette sorte; un fragment du biofilm est prélevé et destiné à des tests de caractérisation physique (viscosité de la matrice ...), chimique, biochimique (éléments constitutifs de la matrice, ...), biologique (microorganismes constitutifs de la matrice en état de latence, en activité, corps morts, ...).

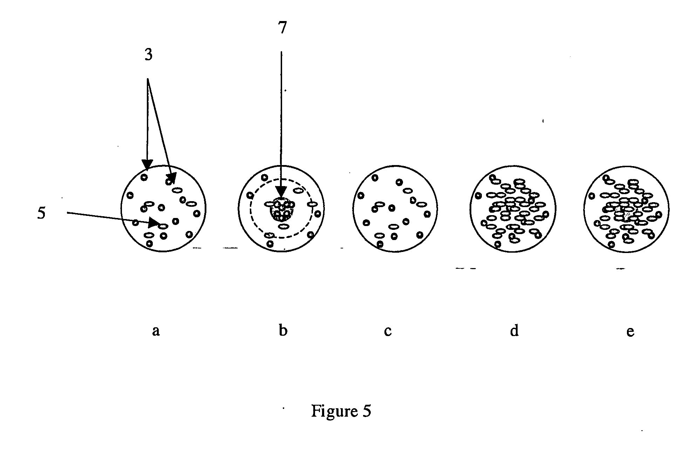

La figure 5 est une autre illustration du principe de détection de la formation et du développement du biofilm dans un réacteur (1) du type tube (1) à fond (2) plat. Cette illustration est une vue en plan depuis le sommet du tube.

Des billes (3) sont déposées au fond de chaque tube (1). Un milieu de culture (4) est alors ajouté dans chacun des tubes (Figure 5a), ce milieu étant ensuite ensemencé avec une souche bactérienne (5) pouvant évoluer en biofilm (6) (Figure 5b à 5e) et ce, dans des conditions de cultures standardisées (température, oxygénation, pH ...).

A intervalle de temps régulier, un aimant (7) positionné sous le tube (1) (Figure 5b et 5e). Lorsque les billes (3) ne rencontrent pas d'obstacle dans leur mouvement ou ne sont pas suffisamment entravées dans la matrice sécrétée par les bactéries (5) et constituant le biofilm (6), elles sont attirées en direction de l'aimant (7) (Figure 5b). Les billes (3) attirées autour de l'aimant (7) libèrent une zone « sans billes » ou « zone claire » simple à détecter, particulièrement de manière visuelle. Lorsque la formation du biofilm (6) est telle que le mouvement des billes (3) est entravé voire empêché, les dites billes (3) restent immobiles au fond du tube (1) (Figures 5d et 5e). Cet état traduit alors un développement de la matrice extracellulaire constitutive du biofilm (6) dans le tube (1) tel que ladite matrice englobe la bille magnétique (1) de la même façon qu'elle englobe les bactéries (5).

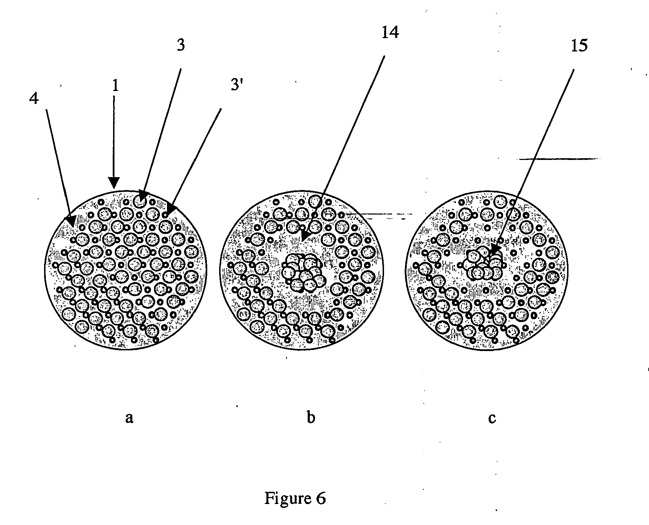

La figure 6 illustre une variante de l'invention présentée à la figure 5.

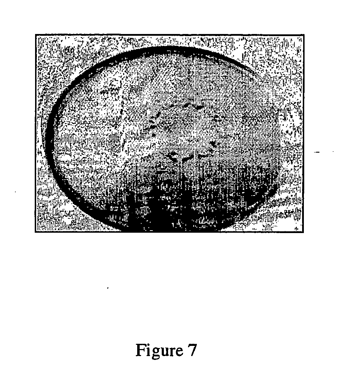

Des boîtes de Pétri (1) contenant un milieu de culture liquide (4) sont ensemencées avec des bactéries (5) et des billes magnétiques (3 et 3') de tailles différentes sont déposées dans chaque boîte (1) (Figure 7). Les conditions de cultures sont standardisées (température, oxygénation, pH, ...) afin de permettre le développement des bactéries et donc le développement du biofilm (6).

A intervalle de temps régulier, un aimant (7) est positionné sous la boîte de Pétri (1). Lorsque la bille (3) ne rencontre pas d'obstacle dans son mouvement ou n'est pas suffisamment entravée dans la matrice sécrétée par les bactéries (5) et constituant le biofilm (6), les billes magnétiques (3) sont attirées en direction de l'aimant (7). Une zone claire (14) se dessine alors entre la limite extérieure de la zone d'influence des lignes de champ magnétique (9) qui attirent les billes et l'agrégat de billes (15). Lorsque la formation du biofilm (6) est telle que le mouvement des billes (3) est entravé voire empêché, les dites billes (3) restent immobiles dans la boîte (1). Cependant, du fait de la taille différente des billes, leur déplacement est fonction de leur taille et de la densité du biofilm. Au fur et à mesure du développement du biofilm, les petites billes en premier verront leur déplacement inhibé par le biofilm, puis avec un développement supplémentaire du biofilm, les grosses billes se verront à leur tour stoppées.

La figure 7 illustre une application particulière de l'invention telle que décrite dans la figure 5 ou dans la figure 6, les billes sont déposées sur une surface recouverte d'un produit contenant un agent antimicrobien, comme par exemple un agent antifouling. Ladite surface peut être en tout matériau, particulier en métal. Lorsqu'un aimant est approché de la surface les billes sont attirées par les lignes de forces de l'aimant, constituant alors une zone de densité en bille plus importante que sur le reste de la surface. Cette application est avantageuse quand on veut mesurer l'efficacité d'un produit antifouling appliqué sur une surface métallique.

Dans cette forme de réalisation particulière, il peut être plus intéressant de faire varier l'intensité du champ magnétique, par exemple en faisant tourner un barreau aimanté sous la surface à tester.

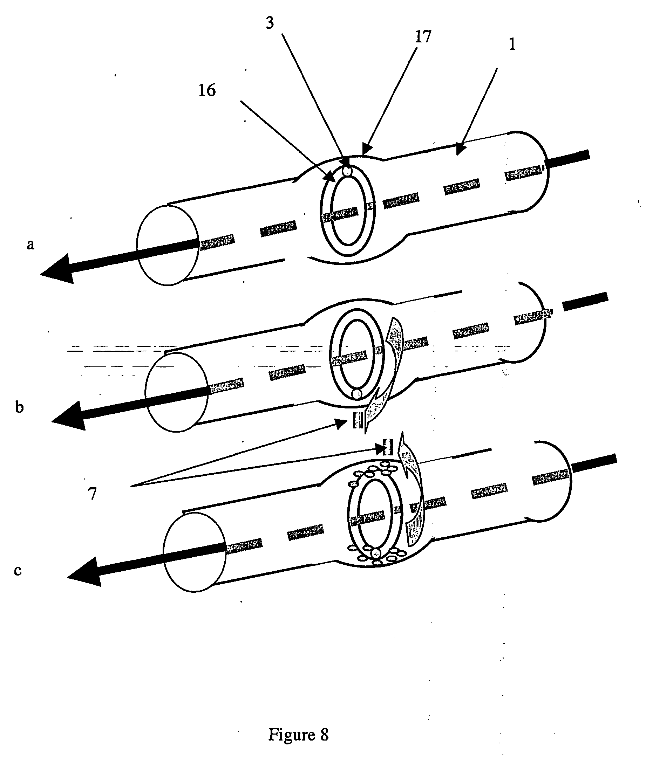

La figure 8 illustre une application particulière de l'invention dans le domaine de la surveillance de la contamination des canalisations, particulièrement dans la surveillance de la contamination des vannes.

Pour modéliser le développement de biofilm sur un support soumis à un flux de liquide (canalisations (1)), il est possible d'utiliser un dispositif avec un anneau (16) emprisonné dans un renflement d'un tuyau (17). Une particule magnétisable (4) est incluse en un point de l'anneau (2). Sous l'action d'un champ magnétique (Figure 8b ou 8c), on peut faire tourner cet anneau.

Si un biofilm se développe au sein du dispositif, le mouvement de l'anneau est entravé.

Ce dispositif modélise une vanne, le site des canalisations où se développent le plus facilement les biofilms.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de détection de la formation et du développement d'un biofilm d'un microorganisme sur une surface dans un milieu de culture (4) liquide, **caractérisé en ce que** ledit procédé comprenant les étapes successives suivantes :
(a) introduire dans ledit milieu de culture au moins une particule chargée électriquement, magnétique ou magnétisable ou recouverte d'au moins une couche magnétique ou magnétisable (3),
(b) maintenir le milieu de culture dans des conditions permettant le développement d'un biofilm par ledit microorganisme sur ladite surface, ladite, au moins une, particule reposant sur ladite surface,
(c) détecter la formation d'un biofilm sur ladite surface par application d'un champ électromagnétique destiné à mettre en mouvement ladite, au moins une particule, la formation d'un biofilm étant détectée lorsque les mouvements de ladite, au moins une, particule à ladite surface sont freinés, voir empêchés du fait de la formation du biofilms.

2. Procédé selon la revendication 1, dans lequel l'étape c) consiste à soumettre ladite, au moins une, particule à un champ électromagnétique, éventuellement appliqué par impulsion.

3. Procédé selon l'une quelconque des revendications 1 ou 2, dans lequel l'étape c) consiste à soumettre ladite, au moins une, particule à une augmentation progressive d'un champ électromagnétique.

4. Procédé selon l'une quelconque des revendications précédentes, dans lequel ledit champ électrique, magnétique ou électromagnétique est généré par des moyens générateurs de champ en mouvement.

5. Procédé selon l'une quelconque des revendications 1 à 4, dans lequel ladite culture de microorganismes s'écoule en flux constant à travers un réacteur (1) ouvert.

6. Procédé selon l'une quelconque des revendications 1 à 5, dans lequel la culture (4) s'écoule à travers un réacteur (1) ouvert en flux discontinu à intervalle de temps donné.

7. Procédé selon l'une quelconque des revendications précédentes, dans lequel dans l'étape c) on éclaire au moyen d'une source lumineuse ladite particule (3) et on détecte le mouvement de ladite particule (3) éclairée.

8. Procédé selon l'une quelconque des revendications précédentes, dans lequel la particule (3) est génératrice d'un signal.

9. Procédé selon la revendication précédente, dans lequel la particule (3) est fluorescente ou phosphorescente ou radioactive ou chimioluminescente.

10. Procédé selon l'une quelconque des revendications précédentes,
- dans lequel dans l'étape (a) on introduit dans le milieu de culture plusieurs particules, et
- dans lequel dans l'étape (c) on détecte la formation d'un biofilm sur ladite surface par application du champ électromagnétique destiné à mettre en mouvement lesdites particules, la formation d'un biofilm étant détecté lorsque les particules ne peuvent pas être rassemblées sur ladite surface par le champ électromagnétique.

11. Procédé selon la revendication 10, dans lequel lorsque les particules peuvent être rassemblées, la détection de ce rassemblement est visuelle.

12. Procédé selon l'une quelconque des revendications 1 à 11, dans lequel ladite culture (4) est homogène ou non homogène, préférentiellement non homogène.

13. Utilisation d'un dispositif comprenant :
- au moins un réacteur de culture (1) destiné à recevoir ladite culture (4) pour réaliser la détection de la formation et du développement de biofilms (6) comprenant au moins une surface qui est immergée dans le milieu de culture lorsqu'il est présent,
- au moins une particule chargée électriquement ou magnétique ou magnétisable ou recouverte d'au moins une couche magnétique ou magnétisable, ladite particule pouvant être immergée dans la culture (4) lorsqu'elle est présente dans le réacteur et reposer sur ladite surface,
- des moyens pour générer un champ électrique ou magnétique ou électromagnétique capable de mettre en mouvement ladite, au moins une, particule (3) sur ladite surface,
- un dispositif de détection optique permettant de détecter des mouvements de ladite particule sur ladite surface dans le milieu de culture pour la mise en oeuvre du procédé tel que défini dans l'une quelconque des revendications 1 à 12.

14. Utilisation selon la revendication 13, dans laquelle ledit réacteur (1) présente une extrémité fermée de sorte à former un fond (2) plat.

15. Utilisation selon la revendication 13, dans laquelle ladite surface est le fond (1) dudit réacteur (1) et présente une ou plusieurs cavités (8, 9) ou sillons, destinés à recevoir la ou lesdites particule(s).

16. Utilisation selon la revendication 13, dans laquelle ledit réacteur (1) présente une extrémité fermée de sorte à former un fond (2) hémisphérique.

17. Utilisation selon la revendication 13, dans laquelle ledit réacteur (1) présente deux extrémités ouvertes.

18. Utilisation selon la revendication 17, dans laquelle le réacteur (1) est configuré pour permettre un écoulement de ladite culture (4) en flux constant ou en flux discontinu à intervalle de temps donné.

19. Utilisation selon l'une quelconque des revendications 13 à 18 dans laquelle ladite particule (3) est génératrice d'un signal détectable par ledit dispositif de détection des mouvements de ladite, au moins une, particule.

20. Utilisation selon la revendication 19, dans laquelle ladite, au moins une, particule (3) est de type fluorescente, phosphorescente ou radioactive ou chimioluminescente.

21. Utilisation selon l'une quelconque des revendications 13 à 20, dans laquelle ladite, au moins une, particule (3) est configurée de telle sorte qu'elle est en position stable au repos dans ledit réacteur (1).

22. Utilisation selon l'une quelconque des revendications 13 à 21, dans laquelle ladite particule (3) présente une taille sensiblement identique à la taille des microorganismes (5).

23. Utilisation selon l'une quelconque des revendications 13 à 22, dans laquelle ledit dispositif de détection optique comporte une source lumineuse émettant en direction de ladite, au moins une, particule (3), et des moyens de détection permettant de détecter les mouvements de ladite particule sur ladite surface (3) dans le milieu de culture (4).

24. Utilisation selon l'une quelconque des revendications 13 à 23, dans laquelle ledit dispositif comprend plusieurs particules qui peuvent être réparties sur ladite surface et y reposer, les moyens pour générer un champ électrique ou magnétique ou électromagnétique permettant de rassembler lesdites particules en libérant une zone sans billes sur ladite surface.

25. Utilisation selon la revendication 23, dans laquelle lorsque les particules peuvent être rassemblées, la détection de ce rassemblement est visuelle.

## Claims

1. Method for detecting the formation and the development of a biofilm of a micro-organism on a surface in a liquid culture medium (4), **characterised in that** said method comprises the following successive steps:
(a) introducing into said culture medium at least one particle that is electrically charged, magnetic or magnetisable or covered with at least one magnetic or magnetisable layer (3),
(b) maintaining the culture medium in conditions making possible the development of a biofilm by said micro-organism on said surface, said, at least one, particle resting on said surface,
(c) detecting the formation of a biofilm on said surface by application of an electromagnetic field intended to set into motion said, at least one particle, the formation of a biofilm being detected when the motions of said, at least one, particle on said surface are slowed down, or even prevented due to the formation of the biofilm.

2. Method according to claim 1, wherein the step (c) consists in subjecting said, at least one, particle to an electromagnetic field, that may be applied by impulsion.

3. Method according to any of claims 1 or 2, wherein the step (c) consists in subjecting said, at least one, particle to a progressive increase of an electromagnetic field.

4. Method according to in any of the preceding claims, wherein said electric, magnetic or electromagnetic field is generated by means that generate motion fields.

5. Method according to any of claims 1 to 4, wherein said culture of micro-organisms flows at a constant rate through an open reactor (1).

6. Method according to any of claims 1 to 5, wherein the culture (4) flows through an open reactor (1) at a discontinuous rate at a given time interval.

7. Method according to any one of the preceding claims, wherein step (c) said particle (3) is illuminated using a light source and the motion de said illuminated particle (3) is detected.

8. Method according to any of the preceding claims, wherein the particle (3) generates a signal.

9. Method according to the preceding claim, wherein the particle (3) is fluorescent or phosphorescent or radioactive or chemoluminescent.

10. Method according to any of the preceding claims,
- wherein step (a) several particles are introduced in the culture medium, and
- wherein step (c) the formation of a biofilm on said surface is detected by applying of the electromagnetic field intended to set into motion said particles, the formation of a biofilm being detected when the particles cannot be grouped together on said surface by the electromagnetic field.

11. Method according to claim 10, wherein when the particles can be grouped together, the detection of this regrouping is visual.

12. Method according to any of claims 1 to 11, wherein said culture (4) is homogenous or non-homogenous, preferably non-homogenous.

13. Use of a device comprising:
- at least one culture reactor (1) intended to receive said culture (4) in order to carry out the detection of the formation and of the development of biofilms (6) comprising at least one surface which is immersed in the culture medium when it is present,
- at least one particle that is charged electrically, or magnetic or magnetisable or covered with at least one magnetic or magnetisable layer, said particle being able to be immersed in the culture (4) when it is present in the reactor and rest on said surface,
- means for generating an electric or magnetic or electromagnetic field capable of setting into motion said, at least one, particle (3) on said surface,
- an optical detection device making it possible to detect motions of said particle on said surface in the culture medium for the implementation of the method such as defined in any one of claims 1 to 12.

14. Use according to claim 13, wherein said reactor (1) has a closed end in such a way as to form a flat bottom (2).

15. Use according to claim 13, wherein said surface is the bottom (1) of said reactor (1) and has one or several cavities (8, 9) or grooves, intended to receive said particle(s).

16. Use according to claim 13, wherein said reactor (1) has a closed end in such a way as to form a hemispheric bottom (2).

17. Use according to claim 13, wherein said reactor (1) has two open ends.

18. Use according to claim 17, wherein the reactor (1) is configured to allow for the flow of said culture (4) at a constant rate or at a discontinuous rate at a given time interval.

19. Use according to any of claims 13 to 18 wherein said particle (3) generates a signal that can be detected by said device for the detecting of motions of said, at least one, particle.

20. Use according to claim 19, wherein said, at least one, particle (3) is of the fluorescent, phosphorescent or radioactive or chemoluminescent type.

21. Use according to any of claims 13 to 20, wherein said, at least one, particle (3) is configured in such a way that it is in a stable position at rest in said reactor (1).

22. Use according to any of claims 13 to 21, wherein said particle (3) has a size that is substantially identical to the size of the micro-organisms (5).

23. Use according to any of claims 13 to 22, wherein said optical detection device comprises a light source emitting in the direction of said, at least one, particle (3), and means of detecting making it possible to detect the motions of said particle on said surface (3) in the culture medium (4).

24. Use according to any of claims 13 to 23, wherein said device comprises several particles that can be distributed on said surface and rest there, the means for generating an electric, magnetic or electromagnetic field making it possible to group together said particles by releasing a zone without balls on said surface.

25. Use according to claim 23, wherein when the particles can be grouped, the detection of this regrouping is visual.

## Patentansprüche

1. Verfahren zum Detektieren der Bildung und der Entwicklung eines Biofilms eines Mikroorganismus auf einer Oberfläche in einem flüssigen Kulturmedium (4), **dadurch gekennzeichnet, dass** das Verfahren folgende aufeinander folgende Schritte umfasst:
(a) das Einsetzen in das Kulturmedium von mindestens einem Partikel, das elektrisch geladen, magnetisch oder magnetisierbar oder mit mindestens einer magnetischen oder magnetisierbaren Schicht überzogen ist (3),
(b) das Halten des Kulturmediums unter Bedingungen, die die Entwicklung eines Biofilms durch den Mikroorganismus auf der Oberfläche ermöglichen, wobei mindestens das eine Partikel auf der Oberfläche verweilt,
(c) das Detektieren der Bildung eines Biofilms auf der Oberfläche durch Anlegen eines elektromagnetischen Feldes, das dazu bestimmt ist, mindestens das eine Partikel in Bewegung zu versetzen, wobei die Bildung eines Biofilms detektiert wird, wenn die Bewegungen mindestens des einen Partikels auf der Oberfläche aufgrund der Bildung des Biofilms gebremst oder sogar verhindert werden.

2. Verfahren nach Anspruch 1, wobei Schritt c) darin besteht, mindestens das eine Partikel einem elektromagnetischen Feld auszusetzen, das eventuell durch einen Impuls angelegt wird.

3. Verfahren nach einem der Ansprüche 1 oder 2, wobei Schritt c) darin besteht, mindestens das eine Partikel einer progressiven Verstärkung eines elektromagnetischen Feldes auszusetzen.

4. Verfahren nach einem der vorhergehenden Ansprüche, wobei das elektrische, magnetische oder elektromagnetische Feld von in Bewegung stehenden Mitteln zur Felderzeugung erzeugt wird.

5. Verfahren nach einem der Ansprüche 1 bis 4, wobei sich die Kultur von Mikroorganismen in konstantem Fluss durch einen offenen Reaktor (1) hindurch absetzt.

6. Verfahren nach einem der Ansprüche 1 bis 5, wobei sich die Kultur (4) in diskontinuierlichem Fluss mit gegebenem Zeitintervall durch einen offenen Reaktor (1) hindurch absetzt.

7. Verfahren nach einem der vorhergehenden Ansprüche, wobei in Schritt c) das Partikel (3) mittels einer Lichtquelle beleuchtet und die Bewegung des beleuchteten Partikels (3) detektiert wird.

8. Verfahren nach einem der vorhergehenden Ansprüche, wobei das Partikel (3) Erzeuger eines Signals ist.

9. Verfahren nach dem vorhergehenden Anspruch, wobei das Partikel (3) fluoreszierend oder phosphoreszierend oder radioaktiv oder chemilumineszierend ist.

10. Verfahren nach einem der vorhergehenden Ansprüche,
- wobei in Schritt (a) mehrere Partikel in das Kulturmedium eingesetzt werden, und
- wobei in Schritt (c) die Bildung eines Biofilms auf der Oberfläche durch Anlegen des elektromagnetischen Feldes detektiert wird, das dazu bestimmt ist, die Partikel in Bewegung zu versetzen, wobei die Bildung eines Biofilms detektiert wird, wenn die Partikel vom elektromagnetischen Feld auf der Oberfläche nicht zusammengeführt werden können.

11. Verfahren nach Anspruch 10, wobei, wenn die Partikel zusammengeführt werden können, das Detektieren dieser Zusammenführung visuell ist.

12. Verfahren nach einem der Ansprüche 1 bis 11, wobei die Kultur (4) homogen oder nicht homogen, vorzugsweise nicht homogen, ist.

13. Verwendung einer Vorrichtung, umfassend:
- mindestens einen Kulturreaktor (1), der dazu bestimmt ist, die Kultur (4) aufzunehmen, um das Detektieren der Bildung und der Entwicklung von Biofilmen (6) durchzuführen, umfassend mindestens eine Oberfläche, die in das Kulturmedium, wenn es vorhanden ist, eingetaucht ist,
- mindestens ein Partikel, das elektrisch geladen oder magnetisch oder magnetisierbar oder mit mindestens einer magnetischen oder magnetisierbaren Schicht überzogen ist, wobei das Partikel in die Kultur (4) eingetaucht werden kann, wenn sie im Reaktor vorhanden ist, und auf der Oberfläche verweilen kann,
- Mittel zum Erzeugen eines elektrischen oder magnetischen oder elektromagnetischen Feldes, das imstande ist, mindestens das eine Partikel (3) auf der Oberfläche in Bewegung zu versetzen,
- eine Vorrichtung zum optischen Detektieren, die das Detektieren der Bewegungen des Partikels auf der Oberfläche im Kulturmedium ermöglicht,
um das Verfahren, so wie es in einem der Ansprüche 1 bis 12 definiert ist, umzusetzen.

14. Verwendung nach Anspruch 13, wobei der Reaktor (1) ein geschlossenes Ende aufweist, um einen flachen Boden (2) zu bilden.

15. Verwendung nach Anspruch 13, wobei die Oberfläche der Boden (1) des Reaktors (1) ist und eine oder mehrere Aushöhlungen (8, 9) oder Furchen aufweist, die dazu bestimmt sind, das oder die Partikel aufzunehmen.

16. Verwendung nach Anspruch 13, wobei der Reaktor (1) ein geschlossenes Ende aufweist, um einen halbkugelförmigen Boden (2) zu bilden.

17. Verwendung nach Anspruch 13, wobei der Reaktor (1) zwei offene Enden aufweist.

18. Verwendung nach Anspruch 17, wobei der Reaktor (1) ausgeführt ist, um ein Absetzen der Kultur (4) in konstantem Fluss oder in diskontinuierlichem Fluss mit gegebenem Zeitintervall zu ermöglichen.

19. Verwendung nach einem der Ansprüche 13 bis 18, wobei das Partikel (3) Erzeuger eines Signals ist, das für die Vorrichtung zum Detektieren der Bewegungen mindestens des einen Partikels detektierbar ist.

20. Verwendung nach Anspruch 19, wobei mindestens das eine Partikel (3) von fluoreszierender, phosphoreszierender oder radioaktiver oder chemilumineszierender Art ist.

21. Verwendung nach einem der Ansprüche 13 bis 20, wobei mindestens das eine Partikel (3) so ausgeführt ist, dass es sich in stabiler Lage in Ruheposition im Reaktor (1) befindet.

22. Verwendung nach einem der Ansprüche 13 bis 21, wobei das Partikel (3) eine Größe aufweist, die mit der Größe der Mikroorganismen (5) im Wesentlichen identisch ist.

23. Verwendung nach einem der Ansprüche 13 bis 22, wobei die Vorrichtung zum optischen Detektieren eine Lichtquelle, die in die Richtung mindestens des einen Partikels (3) ausstrahlt, und Mittel zum Detektieren umfasst, die das Detektieren der Bewegungen des Partikels auf der Oberfläche (3) im Kulturmedium (4) ermöglichen.

24. Verwendung nach einem der Ansprüche 13 bis 23, wobei die Vorrichtung mehrere Partikel umfasst, die auf der Oberfläche verteilt sein und darauf verweilen können, wobei die Mittel zum Erzeugen eines elektrischen oder magnetischen oder elektromagnetisches Feldes das Zusammenführen der Partikel durch Freisetzen einer Zone ohne Kugeln auf der Oberfläche ermöglichen.

25. Verwendung nach Anspruch 23, wobei, wenn die Partikel zusammengeführt werden können, das Detektieren dieser Zusammenführung visuell ist.
